# EUROPEAN PATENT SPECIFICATION

(11) **EP 4 278 774 B1**
(45) Date of publication and mention of the grant of the patent: **22.10.2025**
(21) Application number: 21918349.8
(22) Date of filing: 14.01.2021
(51) Int. Cl.: H04W 72/04, H04L 1/1607, H04L 1/1829, H04L 1/1867

(54) **DOWNLINK CONTROL INFORMATION FEEDBACK**
FEEDBACK FÜR DOWNLINK-STEUERUNGSINFORMATIONEN
RÉTROINFORMATION D'INFORMATIONS DE COMMANDE DE LIAISON DESCENDANTE

(43) Date of publication of application: 22.11.2023
(73) Proprietor: Lenovo (Beijing) Limited, Beijing 100085 (CN)
(72) Inventor: ZHU, Chenxi, Fairfax, Virginia 22033 (US); LIU, Bingchao, Beijing 102200 (CN); LING, Wei, Beijing 102299 (CN); ZHANG, Yi, Beijing 100029 (CN); XIAO, Lingling, Beijing 100086 (CN)
(74) Representative: Openshaw & Co.
(86) International application number: PCT/CN2021/071714
(87) International publication number: WO 2022/151139

(56) References cited:
- WO-A1-2020/037050
- CN-A- 109 639 398
- CN-A- 110 557 233
- US-A1- 2020 359 387
- US-A1- 2020 389 847
- ZTE: "Enhancements on Multi-beam Operation", vol. RAN WG1, no. e-Meeting; 20201026 - 20201113, 1 November 2020 (2020-11-01), XP052349125, Retrieved from the Internet <URL:https://ftp.3gpp.org/tsg_ran/WG1_RL1/TSGR1_103-e/Docs/R1-2007763.zip R1-2007763 Enhancements on multi-beam operation.docx> [retrieved on 20201101]
- NTT DOCOMO ET AL: "Discussion on multi-beam operation", vol. RAN WG1, no. e-Meeting; 20201026 - 20201113, 1 November 2020 (2020-11-01), XP052351099, Retrieved from the Internet <URL:https://ftp.3gpp.org/tsg_ran/WG1_RL1/TSGR1_103-e/Docs/R1-2009174.zip R1-2009174.docx> [retrieved on 20201101]
- ZTE, SANECHIPS: "Further consideration on Uplink HARQ-ACK feedback in eFeMTC", 3GPP DRAFT; R2-1805949 FURTHER CONSIDERATION ON UPLINK HARQ-ACK FEEDBACK IN EFEMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sanya, China; 20180416 - 20180420, 14 April 2018 (2018-04-14), Mobile Competence Centre ; 650, route des Lucioles ; F-06921 Sophia-Antipolis Cedex ; France , XP051429560

## Description

### FIELD

The subject matter disclosed herein relates generally to wireless communications and more particularly relates to downlink control information feedback.

### BACKGROUND

The following abbreviations are herewith defined, at least some of which are referred to within the following description: Third Generation Partnership Project ("3GPP"), 5G Globally Unique Temporary UE Identifier ("5G-GUTI"), 5G QoS Indicator ("5QI"), Authentication Authorization and Accounting ("AAA"), Acknowledge Mode ("AM"), Access and Mobility Management Function ("AMF"), Aperiodic ("AP"), Authentication Server Function ("AUSF"), Backhaul ("BH"), Broadcast Multicast ("BM"), Buffer Occupancy ("BO"), Base Station ("BS"), Buffer Status Report ("BSR"), Bandwidth ("BW"), Bandwidth Part ("BWP"), Carrier Aggregation ("CA"), Code Block Group ("CBG"), CBG Flushing Out Information ("CBGFI"), CBG Transmission Information ("CBGTI"), Component Carrier ("CC"), Control Channel Element ("CCE"), Code Division Multiplexing ("CDM"), Control Element ("CE"), Coordinated Multipoint ("CoMP"), Categories of Requirements ("CoR"), Control Resource Set ("CORESET"), Cyclic Prefix ("CP"), Cyclic Prefix OFDM ("CP-OFDM"), Cyclic Redundancy Check ("CRC"), CSI-RS Resource Indicator ("CRI"), Cell RNTI ("C-RNTI"), Channel State Information ("CSI"), CSI IM ("CSI-IM"), CSI RS ("CSI-RS"), Channel Quality Indicator ("CQI"), Central Unit ("CU"), Codeword ("CW"), Downlink Assignment Index ("DAI"), Downlink Control information ("DCI"), Downlink Feedback Information ("DF1"), Downlink ("DL"), Discrete Fourier Transform Spread OFDM ("DFT-s-fOFDM"), Demodulation Reference Signal ("DMRS" or "DM-RS"), Data Radio Bearer ("DRB"), Dedicated Short-Range Communications ("DSIZC"), Distributed Unit ("DU"), Enhanced Mobile Broadband ("eMBB"), Evolved Node B ("eNB"), Enhanced Subscriber Identification Module ("eSIM"), Enhanced ("E"), Edge Application Server ("EAS"), Edge Configuration Server ("ECS"), Edge Enabler Client ("EEC"), Edge Enabler Server ("EES"), Frequency Division Duplex ("FDD"), Frequency Division Multiplexing ("FDM"), Frequency Division Multiple Access ("FDMA"), Fully-Qualified Domain Name ("FQDN"), Frequency Range ("FR"), 450 MHz - 6000 MHz ("FR1"), 24250 MHz - 52600 MHz ("FR2"), Globally Unique Temporary UE Identifier ("GUTI"), Hybrid Automatic Repeat Request ("HARQ"), High-Definition Multimedia Interface ("HDMI"), High-Speed Train ("HST"), Integrated Access Backhaul ("IAB"), Identity or Identifier or Identification ("ID"), Information Element ("IE"), Interference Measurement ("IM"), International Mobile Subscriber Identity ("IMSI"), Internet-of-Things ("IoT"), Internet Protocol ("IP"), Joint Transmission ("JT"), Key Derivation Function ("KDF"), Level 1 ("L1"), L1 RSRP ("L1-RSRP"), L1 SINR ("L1-SINR"), Level 2 ("L2"), Logical Channel ("LCH"), Logical Channel Group ("LCG"), Logical Channel ID ("LCID"), Logical Channel Prioritization ("LCP"), Layer Indicator ("Ll"), Least-Significant Bit ("LSB"), Long Term Evolution ("LTE"), Levels of Automation ("LoA"), Medium Access Control ("MAC"), Message Authentication Code for Integrity ("MAC-I"), Modulation Coding Scheme ("MCS"), Multi DCI ("M-DCI"), Mobile Edge Computing ("MEC"), Master Information Block ("MIB"), Multiple Input Multiple Output ("MIMO"), Maximum Permissible Exposure ("MPE"), Most-Significant Bit ("MSB"), Mobile Station International Subscriber Directory Number ("MSISDN"), Mobile-Termination ("MT"), Machine Type Communication ("MTC"), Multi PDSCH ("Multi-PDSCH"), Multi TRP ("M-TRP"), Multi--User ("MU"), Multi-User MIMO ("MU-MIMO"), Minimum Mean Square Error ("MMSE"), Negative-Acknowledgment ("NACK") or ("NAK"), Network Access Identifier ("NAI"), Non Access Stratum ("NAS"), Non-Coherent Joint Transmission ("NCJT"), Network Exposure Function ("NEF"), Next Generation ("NG"), Next Generation Node B ("gNB"), Generic Public Subscription Identifier ("GPSI"), New Radio ("NR"), Non-Zero Power ("NZP"), NZP CSI-RS ("NZP-CSI-RS"), Orthogonal Frequency Division Multiplexing ("OFDM"), Peak-to-Average Power Ratio ("PAPR"), Physical Broadcast Channel ("PBCH"), Physical Downlink Control Channel ("PDCCH"), Physical Downlink Shared Channel ("PDSCH"), PDSCH Configuration ("PDSCH-Config"), Policy Control Function ("PCF"), Packet Data Convergence Protocol ("PDCP"), Packet Data Network ("PDN"), Protocol Data Unit ("PDU"), Permanent Equipment Identifier ("PEI"), Public Land Mobile Network ("PLMN"), Precoding Matrix Indicator ("PMI"), ProSe Per Packet Priority ("PPPP"), ProSe Per Packet Reliability ("PPPR"), Physical Resource Block ("PRB"), Packet Switched ("PS"), Physical Sidelink Control Channel ("PSCCH"), Physical Sidelink Shared Channel ("PSSCH"), Phase Tracking RS ("PTRS" or "PT-RS"), Physical Uplink Control Channel ("PUCCH"), Physical Uplink Shared Channel ("PUSCH"), Quasi Co-Located ("QCL"), Quality of Service ("QoS"), Random Access Channel ("RACH"), Radio Access Network ("RAN"), Radio Access Technology ("RAT"), Resource Element ("RE"), Radio Frequency ("RF"), Rank Indicator ("RI"), Radio Link Control ("RLC"), Radio Link Failure ("RLF"), Radio Network Temporary Identifier ("RNTI"), Resource Pool ("RP"), Radio Resource Control ("RRC"), Remote Radio Head ("RRH"), Reference Signal ("RS"), Reference Signal Received Power ("RSRP"), Reference Signal Received Quality ("RSRQ"), Redundancy Version ("RV"), Receive ("RX"), Security Association ("SA"), Service Based Architecture ("SBA"), Single Carrier Frequency Domain Spread Spectrum ("SC-FDSS"), Secondary Cell ("SCell"), Spatial Channel Model ("SCM"), Sub Carrier Spacing ("SCS"), Single DCI ("S-DCI"), Spatial Division Multiplexing ("SDM"), Service Data Unit ("SDU"), Single Frequency Network ("SFN"), Subscriber Identity Module ("SIM"), Signal-to-Interference Ratio ("SINR"), Sidelink ("SL"), Session Management Function ("SMF"), Sequence Number ("SN"), Semi Persistent ("SP"), Scheduling Request ("SR"), SRS Resource Indicator ("SRI"), Sounding Reference Signal ("SRS"), Synchronization Signal ("SS"), SS/PBCH Block ("SSB"), Subscription Concealed Identifier ("SUCI"), Subscription Permanent Identifier ("SUPI"), Transport Block ("TB"), Transmission Configuration Indication ("TCI"), Time Division Duplex ("TDD"), Time Division Multiplexing ("TDM"), Temporary Mobile Subscriber Identity ("TMSI"), Transmit Power Control ("TPC"), Transmitted Precoding Matrix Indicator ("TPMI"), Transmission Reception Point ("TRP"), Transmission Reference Signal ("TRS"), Technical Standard ("TS"), Transmit ("TX"), Unified Data Management ("UDM"), User Data Repository ("UDR"), User Entity/Equipment (Mobile Terminal) ("UE"), Universal Integrated Circuit Card ("UICC"), Uplink ("UL"), Uplink Power Control ("UL-PC"), Unacknowledged Mode ("UM"), Universal Mobile Telecommunications System ("UMTS"), LTE Radio Interface ("Uu interface"), User Plane ("UP"), User Plane Function ("UPF"), Ultra Reliable Low Latency Communication ("URLLC"), Universal Subscriber Identity Module ("USIM"), Universal Terrestrial Radio Access Network ("UTRAN"), Vehicle to Everything ("V2X"), Voice Over IP ("VoIP"), Visited Public Land Mobile Network ("VPLMN"), Virtual Resource Block ("VRB"), Vehicle RNTI ("V-RNTI"), Worldwide Interoperability for Microwave Access ("WiMAX"), Zero Forcing ("ZF"), Zero Power ("ZP"), and ZP CSI-RS ("ZP-CSI-RS"). As used herein, "HARQ-ACK" may represent collectively the Positive Acknowledge ("ACK") and the Negative Acknowledge ("NAK"). ACK means that a TB is correctly received while NAK means a TB is erroneously received.

In certain wireless communications networks, DCI may be transmitted.

ZTE, "Enhancements on Multi-beam Operation", R1-2007763, 3GPP TSG RAN WG1 Meeting #103-e, e-Meeting, October 26th - November 13th, 2020, provides views on enhancements including unified TCI framework, L1/L2-centric inter-cell mobility and UL beam selection for UE with multiple panels are elaborated.

NTT DOCOMO, "Discussion on multi-beam operation", 3GPP TSG RAN WG1 Meeting #103-e, e-Meeting, October 26th - November 13th, 2020, discusses beam-management-related enhancements.

### BRIEF SUMMARY

The invention is defined by the appended independent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for downlink control information feedback;
Figure 2 is a schematic block diagram illustrating one embodiment of an apparatus that may be used for downlink control information feedback;
Figure 3 is a schematic block diagram illustrating another embodiment of an apparatus that may be used for downlink control information feedback;
Figure 4 is a schematic flow chart diagram illustrating one embodiment of a method for downlink control information feedback; and
Figure 5 is a schematic flow chart diagram illustrating another embodiment of a method for downlink control information feedback.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

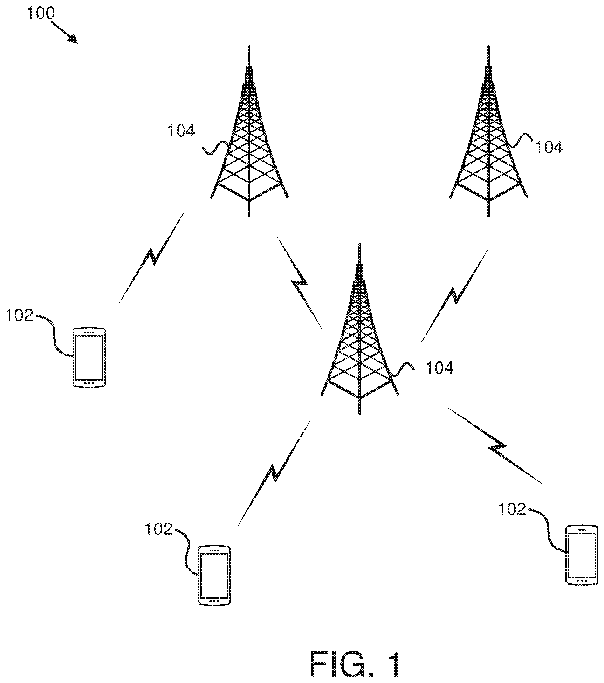

Figure 1 depicts an embodiment of a wireless communication system 100 for downlink control information feedback. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), IoT devices, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals and/or the remote units 102 may communicate directly with other remote units 102 via sidelink communication.

The network units 104 may be distributed over a geographic region. In certain embodiments, a network unit 104 may also be referred to as an access point, an access terminal, a base, a base station, a Node-B, an eNB, a gNB, a Home Node-B, a RAN, a relay node, a device, a network device, an IAB node, a donor IAB node, or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with the 5G or NG (Next Generation) standard of the 3GPP protocol, wherein the network unit 104 transmits using NG RAN technology. More generally, however, the wireless communication system 100 may implement some other open or proprietary communication protocol, for example, WiMAX, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a network unit 104 may transmit downlink control information to a user equipment, wherein the downlink control information comprises a transmission configuration indicator field, and the transmission configuration indicator field signals at least one common beam for transmissions on at least one channel, at least one reference signal resource, or a combination thereof. In certain embodiments, the network unit 104 may receive a hybrid automatic repeat request codebook from the user equipment, wherein the hybrid automatic repeat request codebook comprises a downlink control information feedback bit indicating whether the user equipment successfully received the downlink control information. In various embodiments, the network unit 104 may transmit or receive on the at least one channel, the at least one reference signal resource, or the combination thereof in response to the downlink control information feedback bit indicating that the user equipment successfully received the downlink control information based on the transmission configuration indicator field signaled in the downlink control information. Accordingly, a network unit 104 may be used for downlink control information feedback.

In some embodiments, a remote unit 102 may receive downlink control information from a base station, wherein the downlink control information comprises a transmission configuration indicator field, and the transmission configuration indicator field signals at least one common beam for transmissions on at least one channel, at least one reference signal resource, or a combination thereof. In some embodiments, the remote unit 102 may transmit a hybrid automatic repeat request codebook to the base station, wherein the hybrid automatic repeat request codebook comprises a downlink control information feedback bit indicating whether the remote unit 102 successfully received the downlink control information. In certain embodiments, the remote unit 102 may apply a transmission configuration indicator state indicated by the transmission configuration indicator field to the at least one channel, the at least one reference signal resource, or the combination thereof in response to successfully receiving the downlink control information. Accordingly, a remote unit 102 may be used for downlink control information feedback.

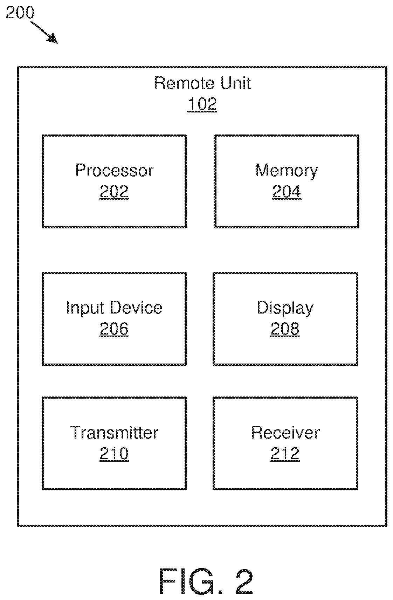

Figure 2 depicts one embodiment of an apparatus 200 that may be used for downlink control information feedback. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, an LCD display, an LED display, an OLED display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In various embodiments, the receiver 212 receives downlink control information from a base station, wherein the downlink control information comprises a transmission configuration indicator field, and the transmission configuration indicator field signals at least one common beam for transmissions on at least one channel, at least one reference signal resource, or a combination thereof. In various embodiments, the transmitter 210 transmits a hybrid automatic repeat request codebook to the base station, wherein the hybrid automatic repeat request codebook comprises a downlink control information feedback bit indicating whether the user equipment successfully received the downlink control information. In certain embodiments, the processor 202 applies a transmission configuration indicator state indicated by the transmission configuration indicator field to the at least one channel, the at least one reference signal resource, or the combination thereof in response to successfully receiving the downlink control information.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

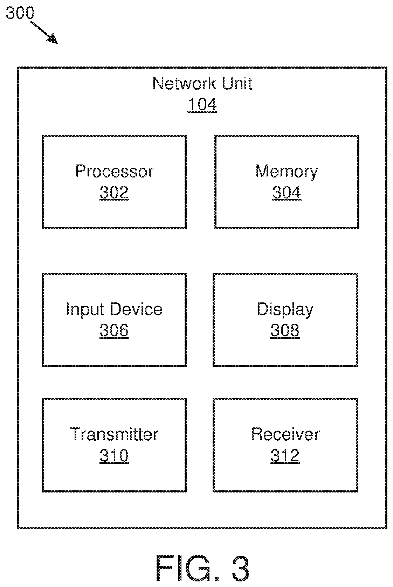

Figure 3 depicts another embodiment of an apparatus 300 that may be used for downlink control information feedback. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In some embodiments, the transmitter 310 transmits downlink control information to a user equipment, wherein the downlink control information comprises a transmission configuration indicator field, and the transmission configuration indicator field signals at least one common beam for transmissions on at least one channel, at least one reference signal resource, or a combination thereof. In some embodiments, the receiver 312 receives a hybrid automatic repeat request codebook from the user equipment, wherein the hybrid automatic repeat request codebook comprises a downlink control information feedback bit indicating whether the user equipment successfully received the downlink control information. In certain embodiments, the transmitter 310 transmits or receives on the at least one channel, the at least one reference signal resource, or the combination thereof in response to the downlink control information feedback bit indicating that the user equipment successfully received the downlink control information based on the transmission configuration indicator field signaled in the downlink control information.

Although only one transmitter 310 and one receiver 312 are illustrated, the network unit 104 may have any suitable number of transmitters 310 and receivers 312. The transmitter 310 and the receiver 312 may be any suitable type of transmitters and receivers. In one embodiment, the transmitter 310 and the receiver 312 may be part of a transceiver.

In certain embodiments, if a DCI-based beam indication is applied, a DCI format (e.g., DCI format 1_1, DCI format 1_2) may be sent to a UE to signal a new beam. The new beam may be used for PDSCH, PDCCH, PUSCH, and/or PUCCH.

In various embodiments, to facilitate a UE receiving new TCI information correctly, a UE needs to let a gNB know that it has received TCI carrying DCI through an acknowledgement. Described herein are various embodiments for a UE to send an acknowledgement of DCI to a gNB using a codebook (e.g., Type 1 codebook, semi-static codebook).

In some embodiments, a HARQ process runs for PDSCH, and, based on whether TBs of a PDSCH are received successfully, an ACK or NACK bit is generated for each TB. In certain embodiments, there may be two types of HARQ codebooks: Type 1 (semi-static) codebook and Type 2 (dynamic) codebook. In a Type 1 codebook, ACK/NACK bits may be generated for each candidate PDSCH opportunity (e.g., each opportunity for a TB to be transmitted in an PDSCH channel) and may be based on a PDSCH to HARQ timing value (e.g., K1). In a Type 2 codebook, ACK/NACK bits may be generated for each PDSCH scheduled by DCI or each SPS PDSCH. In both Type 1 and 2 codebooks, ACK/NACK bits correspond to PDSCH (e.g., not to DCI scheduling the PDSCH).

In certain configurations, a HARQ-ACK codebook does not reflect the status of DCI reception (e.g., the HARQ-ACK codebook only reflects the status of PDSCH reception). In some embodiments, if each PDSCH candidate has 1 bit in a HARQ-ACK codebook, and a gNB receives an ACK in Type 1 codebook, the gNB can tell that a UE received both the DCI scheduling the PDSCH and the PDSCH itself. However, if a gNB receives a NACK, the gNB can only tell that the UE did not receive the PDSCH successfully, but the gNB cannot be certain whether the DCI scheduling the PDSCH was received or not. Accordingly, in such configurations, it is possible that the UE received the DCI successfully but could not decode the PDSCH TB successfully, or the UE did not receive the DCI scheduling the PDSCH at all. For the gNB to know for sure whether the DCI was received, an explicit ACK/NACK for DCI may be incorporated into a HARQ codebook.

In various embodiments, because a Type 1 codebook is semi-static and includes HARQ ACK/NACK bits corresponding to each PDSCH candidate, how PDSCH reception candidates are computed may not change. In certain embodiments, an acknowledgement of DCI carrying a TCI update may be incorporated into the HARQ-ACK/NACK bits corresponding to PDSCH candidate receptions.

In some embodiments, if a PDSCH candidate has corresponding feedback having more than 1 ACK-NACK bit, one bit may be reserved for explicit acknowledgement of TCI carrying DCI that schedules the PDSCH.

In one embodiment, if PDSCH scheduled by a DCI format (e.g., DCI format 1_1, DCI format 1_2) can carry up to 2 transport blocks (e.g., configured by RRC signaling as maxNrofCodeWordsScheduledByDCI=2, and harq-ACK-SpatialBundlingPUCCH (when HARQ feedback is sent in PUCCH) or SpatialBundlingPUSCH (when HARQ feedback is sent in PUSCH)), each PDSCH candidate has two bits for ACK/NACK (e.g., one for each transport block). In such an embodiment, instead of having one HARQ-ACK feedback bit for each transport block, a UE transmits a binary AND operation of feedback bits corresponding to the two TBs (e.g., first bit) and uses the second bit as a DCI feedback bit. If only 1 TB is transmitted, an ACK is assumed in the place of the HARQ feedback bit corresponding to the second TB. Thus, a single bit is sufficient to carry the ACK information for up to two transport blocks. The DCI feedback bit may be set to 1 if DCI is successfully received, and 0 otherwise. If DCI is not detected, the UE will not decode any TBs, and both the first bit and the second bit of the HARQ-ACK corresponding to the PDSCH candidate will be 0.

In another embodiment, if code block group based transmission is enabled, PDSCH-CodeBlockGroupTransmission may be provided by RRC signaling, and a maximum number of CBGs in a TB are indicated by maxCodeBlockGroupsPerTransportBlock. In a PDSCH, a DCI may schedule up to maxCodeBlockGroupsPerTransportBlock* maxNrofCodeWordsScheduledByDCI code block groups ("CBGs"), and each CBG may have a HARQ-ACK information bit in a HARQ-ACK codebook. Out of maxCodeBlockGroupsPerTransportBlock* maxNrofCodeWordsScheduledByDCI bits, one bit may be reserved as acknowledgement of the DCI scheduling the PDSCH. For example, the last bit of the maxCodeBlockGroupsPerTransportBlock* maxNrofCodeWordsScheduledByDCI HARQ-ACK bits may be used as ACK-NACK for the DCI. If the number of CBGs transmitted is less than maxCodeBlockGroupsPerTransportBlock* maxNrofCodeWordsScheduledByDCI, every CBG has its own HARQ-ACK information bit. If the total number of CBGs is maxCodeBlockGroupsPerTransportBlock* maxNrofCodeWordsScheduledByDCI, the HARQ-ACK information bits of the last two CBGs may be combined into 1 bit using a binary AND operation, thus saving 1 bit for the ACK-NACK of the DCI.

In some embodiments, a PDSCH candidate has only 1 HARQ-ACK information bit if code block group based transmission is not enabled, and maxNrofCodeWordsScheduledByDCI=1 or maxNrofCodeWordsScheduledByDCI=2 and harq-ACK-SpatialBundlingPUCCH is provided. If a TCI carrying DCI scheduling PDSCH (e.g., DCI format 1_1, DCI format 1_2) schedules only a virtual PDSCH, or if TCI carrying DCI schedules PUSCH (e.g., DCI format 0_1, DCI format 0_2), no PDSCH is actually transmitted. Therefore, if a DCI format (e.g., DCI format 1_1, DCI format 1_2) contains some invalid combination of a control field, such as invalid frequency resource allocation, no PDSCH may be transmitted based on it. For the purpose of determining a last OFDM symbol of a virtual PDSCH, a UE may assume the virtual PDSCH is transmitted in the same slot of the DCI (e.g., K0=0), and ends in a particular OFDM symbol, such as the 3rd or the last OFDM symbol of the same slot. This DCI may be used only for signaling a TCI state to a UE. In both cases, the HARQ-ACK corresponding to the PDSCH candidate may be used as ACK-NACK of the DCI.

In certain embodiments, an extra bit may be added to the HARQ-ACK bits corresponding to every PDSCH candidate (e.g., in addition to bits defined for feedback for a corresponding PDSCH candidate) using a configuration provided by RRC signaling. The extra bit may be used by a UE to acknowledge DCI reception. The extra bit may be set to 1 if a DCI is received successfully, and 0 otherwise.

As described herein, a UE may acknowledge to a gNB that the UE has received a DCI updating TCI successfully. Accordingly, if the gNB sends a DCI format (e.g., DCI format 0_1, 0_2, 1_1, 1_2) to the UE to signal a TCI state, and receives an acknowledgement from the UE for the DCI, the gNB understands that the UE has received the DCI successfully, and the gNB and/or the UE may use the newly updated TCI state for future transmission on PDSCH, PUSCH, PDCCH, PUCCH, CSI-RS, and/or SRS resources.

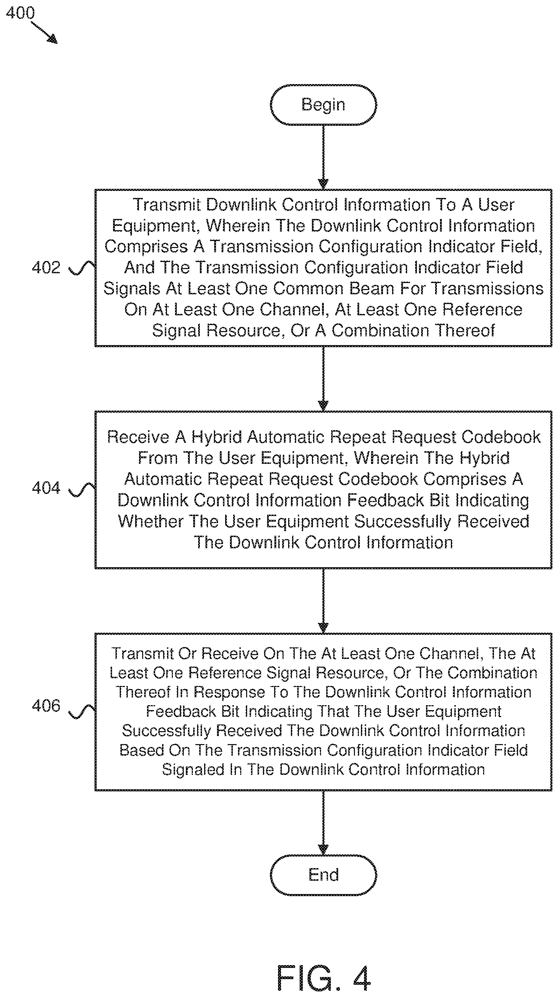

Figure 4 a schematic flow chart diagram illustrating one embodiment of a method 400 for downlink control information feedback. In some embodiments, the method 400 is performed by an apparatus, such as the network unit 104. In certain embodiments, the method 400 may be performed by a processor executing program code, for example, a microcontroller, a microprocessor, a CPU, a GPU, an auxiliary processing unit, a FPGA, or the like.

The method 400 may include transmitting 402 downlink control information to a user equipment, wherein the downlink control information comprises a transmission configuration indicator field, and the transmission configuration indicator field signals at least one common beam for transmissions on at least one channel, at least one reference signal resource, or a combination thereof. In certain embodiments, the method 400 includes receiving 404 a hybrid automatic repeat request codebook from the user equipment, wherein the hybrid automatic repeat request codebook comprises a downlink control information feedback bit indicating whether the user equipment successfully received the downlink control information. In various embodiments, the method 400 includes transmitting 406 or receiving on the at least one channel, the at least one reference signal resource, or the combination thereof in response to the downlink control information feedback bit indicating that the user equipment successfully received the downlink control information based on the transmission configuration indicator field signaled in the downlink control information.

In certain embodiments, the hybrid automatic repeat request codebook comprises a type 1 hybrid automatic repeat request codebook. In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof.

In various embodiments, the transmitting or receiving on the at least one channel, the at least one reference signal resource, or the combination thereof in response to the downlink control information feedback bit indicating that the user equipment successfully received the downlink control information based on the transmission configuration indicator field signaled in the downlink control information comprises transmitting or receiving no earlier than a predetermined time after receiving the hybrid automatic repeat request codebook, and the predetermined time is determined by a specification or by a radio resource configuration protocol.

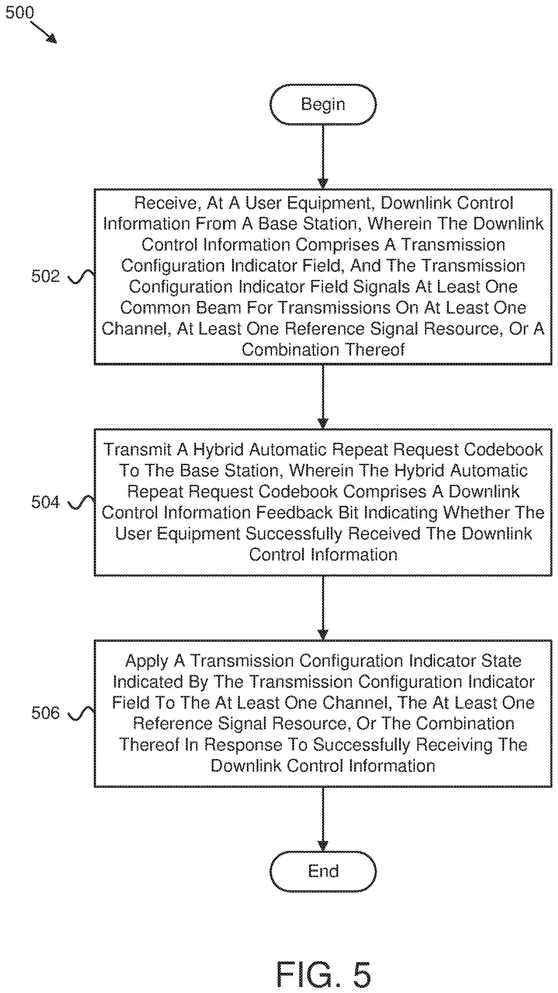

Figure 5 is a schematic flow chart diagram illustrating another embodiment of a method 500 for downlink control information feedback. In some embodiments, the method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

The method 500 may include receiving 502, at a user equipment, downlink control information from a base station, wherein the downlink control information comprises a transmission configuration indicator field, and the transmission configuration indicator field signals at least one common beam for transmissions on at least one channel, at least one reference signal resource, or a combination thereof. In some embodiments, the method 500 includes transmitting 504 a hybrid automatic repeat request codebook to the base station, wherein the hybrid automatic repeat request codebook comprises a downlink control information feedback bit indicating whether the user equipment successfully received the downlink control information. In certain embodiments, the method 500 includes applying 506 a transmission configuration indicator state indicated by the transmission configuration indicator field to the at least one channel, the at least one reference signal resource, or the combination thereof in response to successfully receiving the downlink control information.

In certain embodiments, the hybrid automatic repeat request codebook comprises a type 1 hybrid automatic repeat request codebook. In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof. In various embodiments, the downlink control information feedback bit comprises an acknowledgement in response to the user equipment successfully receiving the downlink control information.

In one embodiment, the downlink control information feedback bit comprises a non-acknowledgement in response to the user equipment not successfully receiving the downlink control information. In certain embodiments, transmitting the hybrid automatic repeat request codebook to the base station comprises transmitting the hybrid automatic repeat request on a physical uplink control channel or a physical uplink shared channel. In some embodiments, the hybrid automatic repeat request codebook comprises a plurality of bits, and the plurality of bits comprises the downlink control information feedback bit and at least one feedback bit corresponding to at least one transport block, at least one code block group, or a combination thereof.

In various embodiments, the at least one feedback bit comprises a single bit indicating hybrid automatic repeat request feedback for two transport blocks transmitted on a physical downlink shared channel. In one embodiment, the single bit is detennined by performing a binary AND operation performed on a first feedback bit corresponding to a first transport block of the two transport blocks and on a second feedback bit corresponding to a second transport block of the two transport blocks. In certain embodiments, each bit of the plurality of bits is reserved for a code block group of up to N code block groups, a last bit of the plurality of bits comprises the downlink control information feedback bit, the plurality of bits comprises N bits, and, in response to having N bits corresponding to N code block groups, a bit corresponding to a last code block group of the at least one code block group and a bit corresponding to a next to last code block group of the at least one code block group are combined into one bit via a binary AND operation.

According to the invention, the downlink control information schedules a virtual physical downlink shared channel transmission without making a physical downlink shared channel transmission, and the downlink control information feedback bit is transmitted in a resource scheduled for feedback corresponding to the virtual physical downlink shared channel transmission. In various embodiments, the virtual physical downlink shared channel transmission comprises a fixed time resource. In one embodiment, the downlink control information feedback bit is an extra feedback bit transmitted with feedback bits corresponding to at least one transport block, at least one code block group, or a combination thereof.

In certain embodiments, applying the transmission configuration indicator state indicated by the transmission configuration indicator field to the at least one channel, the at least one reference signal resource, or the combination thereof in response to successfully receiving the downlink control information comprises applying the transmission configuration indicator state no earlier than a predetermined time after transmitting the hybrid automatic repeat request codebook, and the predetermined time is determined by a specification or by a radio resource configuration protocol.

In one embodiment, a method comprises: transmitting downlink control information to a user equipment, wherein the downlink control information comprises a transmission configuration indicator field, and the transmission configuration indicator field signals at least one common beam for transmissions on at least one channel, at least one reference signal resource, or a combination thereof; receiving a hybrid automatic repeat request codebook from the user equipment, wherein the hybrid automatic repeat request codebook comprises a downlink control information feedback bit indicating whether the user equipment successfully received the downlink control information; and transmitting or receiving on the at least one channel, the at least one reference signal resource, or the combination thereof in response to the downlink control information feedback bit indicating that the user equipment successfully received the downlink control information based on the transmission configuration indicator field signaled in the downlink control information.

In certain embodiments, the hybrid automatic repeat request codebook comprises a type 1 hybrid automatic repeat request codebook.

In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof.

In certain embodiments, the transmitting or receiving on the at least one channel, the at least one reference signal resource, or the combination thereof in response to the downlink control information feedback bit indicating that the user equipment successfully received the downlink control information based on the transmission configuration indicator field signaled in the downlink control information comprises transmitting or receiving no earlier than a predetermined time after receiving the hybrid automatic repeat request codebook, and the predetermined time is determined by a specification or by a radio resource configuration protocol.

In one embodiment, an apparatus comprises: a transmitter that transmits downlink control information to a user equipment, wherein the downlink control information comprises a transmission configuration indicator field, and the transmission configuration indicator field signals at least one common beam for transmissions on at least one channel, at least one reference signal resource, or a combination thereof; and a receiver that receives a hybrid automatic repeat request codebook from the user equipment, wherein the hybrid automatic repeat request codebook comprises a downlink control information feedback bit indicating whether the user equipment successfully received the downlink control information; wherein the transmitter transmits or the receiver receives on the at least one channel, the at least one reference signal resource, or the combination thereof in response to the downlink control information feedback bit indicating that the user equipment successfully received the downlink control information based on the transmission configuration indicator field signaled in the downlink control information.

In certain embodiments, the hybrid automatic repeat request codebook comprises a type 1 hybrid automatic repeat request codebook.

In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof.

In certain embodiments, the transmitter transmitting or the receiver receiving on the at least one channel, the at least one reference signal resource, or the combination thereof in response to the downlink control information feedback bit indicating that the user equipment successfully received the downlink control information based on the transmission configuration indicator field signaled in the downlink control information comprises the transmitter transmitting or the receiver receiving no earlier than a predetermined time after receiving the hybrid automatic repeat request codebook, and the predetermined time is determined by a specification or by a radio resource configuration protocol.

In one embodiment, a method comprises: receiving, at a user equipment, downlink control information from a base station, wherein the downlink control information comprises a transmission configuration indicator field, and the transmission configuration indicator field signals at least one common beam for transmissions on at least one channel, at least one reference signal resource, or a combination thereof; transmitting a hybrid automatic repeat request codebook to the base station, wherein the hybrid automatic repeat request codebook comprises a downlink control information feedback bit indicating whether the user equipment successfully received the downlink control information; and applying a transmission configuration indicator state indicated by the transmission configuration indicator field to the at least one channel, the at least one reference signal resource, or the combination thereof in response to successfully receiving the downlink control information.

In certain embodiments, the hybrid automatic repeat request codebook comprises a type 1 hybrid automatic repeat request codebook.

In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof.

In various embodiments, the downlink control information feedback bit comprises an acknowledgement in response to the user equipment successfully receiving the downlink control information.

In one embodiment, the downlink control information feedback bit comprises a non-acknowledgement in response to the user equipment not successfully receiving the downlink control information.

In certain embodiments, transmitting the hybrid automatic repeat request codebook to the base station comprises transmitting the hybrid automatic repeat request on a physical uplink control channel or a physical uplink shared channel.

In some embodiments, the hybrid automatic repeat request codebook comprises a plurality of bits, and the plurality of bits comprises the downlink control information feedback bit and at least one feedback bit corresponding to at least one transport block, at least one code block group, or a combination thereof.

In various embodiments, the at least one feedback bit comprises a single bit indicating hybrid automatic repeat request feedback for two transport blocks transmitted on a physical downlink shared channel.

In one embodiment, the single bit is determined by performing a binary AND operation performed on a first feedback bit corresponding to a first transport block of the two transport blocks and on a second feedback bit corresponding to a second transport block of the two transport blocks.

In certain embodiments, each bit of the plurality of bits is reserved for a code block group of up to N code block groups, a last bit of the plurality of bits comprises the downlink control information feedback bit, the plurality of bits comprises N bits, and, in response to having N bits corresponding to N code block groups, a bit corresponding to a last code block group of the at least one code block group and a bit corresponding to a next to last code block group of the at least one code block group are combined into one bit via a binary AND operation.

In some embodiments, the downlink control information schedules a virtual physical downlink shared channel transmission without making a physical downlink shared channel transmission, and the downlink control information feedback bit is transmitted in a resource scheduled for feedback corresponding to the virtual physical downlink shared channel transmission.

In various embodiments, the virtual physical downlink shared channel transmission comprises a fixed time resource.

In one embodiment, the downlink control information feedback bit is an extra feedback bit transmitted with feedback bits corresponding to at least one transport block, at least one code block group, or a combination thereof.

In certain embodiments, applying the transmission configuration indicator state indicated by the transmission configuration indicator field to the at least one channel, the at least one reference signal resource, or the combination thereof in response to successfully receiving the downlink control information comprises applying the transmission configuration indicator state no earlier than a predetermined time after transmitting the hybrid automatic repeat request codebook, and the predetermined time is determined by a specification or by a radio resource configuration protocol.

In one embodiment, an apparatus comprises a user equipment. The apparatus further comprises: a receiver that receives downlink control information from a base station, wherein the downlink control information comprises a transmission configuration indicator field, and the transmission configuration indicator field signals at least one common beam for transmissions on at least one channel, at least one reference signal resource, or a combination thereof; a transmitter that transmits a hybrid automatic repeat request codebook to the base station, wherein the hybrid automatic repeat request codebook comprises a downlink control information feedback bit indicating whether the user equipment successfully received the downlink control information; and a processor that applies a transmission configuration indicator state indicated by the transmission configuration indicator field to the at least one channel, the at least one reference signal resource, or the combination thereof in response to successfully receiving the downlink control information.

In certain embodiments, the hybrid automatic repeat request codebook comprises a type 1 hybrid automatic repeat request codebook.

In some embodiments, the at least one channel comprises a physical downlink shared channel, a physical downlink control channel, a physical uplink shared channel, a physical uplink control channel, or a combination thereof, and the at least one reference signal resource comprises at least one channel state information reference signal resource, at least one sounding reference signal resource, or a combination thereof.

In various embodiments, the downlink control information feedback bit comprises an acknowledgement in response to the user equipment successfully receiving the downlink control information.

In one embodiment, the downlink control information feedback bit comprises a non-acknowledgement in response to the user equipment not successfully receiving the downlink control information.

In certain embodiments, the transmitter transmitting the hybrid automatic repeat request codebook to the base station comprises the transmitter transmitting the hybrid automatic repeat request on a physical uplink control channel or a physical uplink shared channel.

In some embodiments, the hybrid automatic repeat request codebook comprises a plurality of bits, and the plurality of bits comprises the downlink control information feedback bit and at least one feedback bit corresponding to at least one transport block, at least one code block group, or a combination thereof.

In various embodiments, the at least one feedback bit comprises a single bit indicating hybrid automatic repeat request feedback for two transport blocks transmitted on a physical downlink shared channel.

In one embodiment, the single bit is determined by performing a binary AND operation performed on a first feedback bit corresponding to a first transport block of the two transport blocks and on a second feedback bit corresponding to a second transport block of the two transport blocks.

In certain embodiments, each bit of the plurality of bits is reserved for a code block group of up to N code block groups, a last bit of the plurality of bits comprises the downlink control information feedback bit, the plurality of bits comprises N bits, and, in response to having N bits corresponding to N code block groups, a bit corresponding to a last code block group of the at least one code block group and a bit corresponding to a next to last code block group of the at least one code block group are combined into one bit via a binary AND operation.

In some embodiments, the downlink control information schedules a virtual physical downlink shared channel transmission without making a physical downlink shared channel transmission, and the downlink control information feedback bit is transmitted in a resource scheduled for feedback corresponding to the virtual physical downlink shared channel transmission.

In various embodiments, the virtual physical downlink shared channel transmission comprises a fixed time resource.

In one embodiment, the downlink control information feedback bit is an extra feedback bit transmitted with feedback bits corresponding to at least one transport block, at least one code block group, or a combination thereof.

In certain embodiments, the processor applying the transmission configuration indicator state indicated by the transmission configuration indicator field to the at least one channel, the at least one reference signal resource, or the combination thereof in response to successfully receiving the downlink control information comprises the processor applying the transmission configuration indicator state no earlier than a predetermined time after transmitting the hybrid automatic repeat request codebook, and the predetermined time is determined by a specification or by a radio resource configuration protocol.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning of the claims are to be embraced within their scope.

## Claims

1. A base station (104, 300) for wireless communication, the base station (104, 300) comprising:
at least one memory (304); and
at least one processor (302) coupled with at least one memory (304) and configured to cause the base station (104, 300) to:
transmit (402) downlink control information, DCI, to a user equipment, UE, (102, 200) wherein the DCI comprises a transmission configuration indicator, TCI, field, and the TCI field signals at least one common beam for downlink or uplink transmissions on at least one of at least one channel or at least one reference signal resource, and wherein the DCI schedules a virtual physical downlink shared channel, PDSCH, transmission without making a PDSCH transmission;
receive (404) a hybrid automatic repeat request, HARQ, codebook from the UE (102, 200), wherein the HARQ codebook comprises a DCI feedback bit indicating whether the UE (102, 200) successfully received the DCI, the DCI feedback bit being transmitted in a resource scheduled for feedback corresponding to the virtual PDSCH transmission; and
transmit or receive (406) on the at least one of the at least one channel or the at least one reference signal resource in response to the DCI feedback bit indicating that the UE (102, 200) successfully received the DCI based on the TCI field signaled in the DCI.

2. The base station (104, 300) of claim 1, wherein the HARQ codebook comprises a Type 1 semi-static HARQ codebook.

3. The base station (104, 300) of claim 1, wherein the at least one channel comprises at least one of a PDSCH, a physical downlink control channel, PDCCH, a physical uplink shared channel, PUSCH, a physical uplink control channel, PUCCH, and the at least one reference signal resource comprises at least one of at least one channel state information, CSI, reference signal, RS, resource, CSI-RS, or at least one sounding reference signal, SRS, resource.

4. The base station (104, 300) of claim 1, wherein the transmitting or receiving on the at least one at least one channel or the at least one reference signal resource in response to the DCI feedback bit indicating that the UE (102, 200) successfully received the DCI based on the TCI field signaled in the DCI comprises transmitting or receiving no earlier than a predetermined time after receiving the HARQ codebook, and the predetermined time is determined by a specification or by a radio resource configuration, RRC, protocol.

5. A user equipment, UE, (102, 200) for wireless communication, the UE (102, 200) comprising:
at least one memory (204); and
at least one processor (202) coupled with at least one memory (204) and configured to cause the UE (102, 200) to:
receive (502) downlink control information, DCI, from a base station (104, 300), wherein the DCI comprises a transmission configuration indicator, TCI, field, and the TCI field signals at least one common beam for downlink or uplink transmissions on at least one of at least one channel or at least one reference signal resource, and wherein the DCI schedules a virtual physical downlink shared channel, PDSCH, transmission without making a PDSCH transmission;
transmit (504) a hybrid automatic repeat request, HARQ, codebook to the base station (104, 300), wherein the HARQ codebook comprises a DCI feedback bit indicating whether the UE (102, 200) successfully received the DCI, the DCI feedback bit being transmitted in a resource scheduled for feedback corresponding to the virtual PDSCH transmission; and
apply (506) a TCI state indicated by the TCI field to the at least one of at least one channel or the at least one reference signal resource in response to successfully receiving the DCI.

6. The UE (102, 200) of claim 5, wherein the at least one channel comprises at least one of a PDSCH, a physical downlink control channel, PDCCH, a physical uplink shared channel, PUSCH, a physical uplink control channel, PUCCH, and the at least one reference signal resource comprises at least one of at least one channel state information, CSI, reference signal, RS, resource, CSI-RS, or at least one sounding reference signal, SRS, resource.

7. The UE (102, 200) of claim 5, wherein the DCI feedback bit comprises an acknowledgement in response to the UE (102, 200) successfully receiving the DCI and a non-acknowledgement in response to the UE (102, 200) not successfully receiving the DCI.

8. The UE (102, 200) of claim 5, wherein transmitting the HARQ codebook to the base station (104, 300) comprises transmitting the HARQ codebook on a PUCCH or a PUSCH.

9. The UE (102, 200) of claim 5, wherein the HARQ codebook comprises a plurality of bits, and the plurality of bits comprises the DCI feedback bit and at least one feedback bit corresponding to at least one of at least one transport block, TB, or at least one code block group, CBG, the at least one feedback bit comprises a single bit indicating HARQ feedback for two TBs transmitted on a PDSCH, and the single bit is determined by performing a binary AND operation performed on a first feedback bit corresponding to a first TB of the two TBs and on a second feedback bit corresponding to a second TB of the two TBs.

10. The UE (102, 200) of claim 9, wherein each bit of the plurality of bits is reserved for a CBG of up to N CBGs, a last bit of the plurality of bits comprises the DCI feedback bit, the plurality of bits comprises N bits, and, in response to having N bits corresponding to N CBGs, a bit corresponding to a last CBG of the at least one CBG and a bit corresponding to a next to last CBG of the at least one CBG are combined into one bit via a binary AND operation.

11. The UE (102, 200) of claim 5, wherein the virtual PDSCH transmission comprises a fixed time resource.

12. The UE (102, 200) of claim 5, wherein the DCI feedback bit is an extra feedback bit transmitted with feedback bits corresponding to at least one of at least one TB, or at least one CBG.

13. The UE (102, 200) of claim 5, wherein applying the TCI state indicated by the TCI field to the at least one of at least one channel or the at least one reference signal resource in response to successfully receiving the DCI comprises applying the TCI state no earlier than a predetermined time after transmitting the HARQ codebook, and the predetermined time is determined by a specification or by a radio resource configuration, RRC, protocol.

14. A method performed by a user equipment, UE, (102, 200), the method comprising:
receiving (502) downlink control information, DCI, from a base station (104, 300), wherein the DCI comprises a transmission configuration indicator, TCI, field, and the TCI field signals at least one common beam for downlink or uplink transmissions on at least one of at least one channel, or at least one reference signal resource, and wherein the DCI schedules a virtual physical downlink shared channel, PDSCH, transmission without making a PDSCH transmission;
transmitting (504) a hybrid automatic repeat request, HARQ, codebook to the base station (104, 300), wherein the HARQ codebook comprises a DCI feedback bit indicating whether the UE (102, 200) successfully received the DCI, the DCI feedback bit being transmitted in a resource scheduled for feedback corresponding to the virtual PDSCH transmission; and
applying (506) a TCI state indicated by the TCI field to the at least one of at least one channel or the at least one reference signal resource in response to successfully receiving the DCI.

15. A computer program product comprising instructions which, when the program is executed by a computer, cause the computer to:
receive (502) downlink control information, DCI, from a base station (104, 300), wherein the DCI comprises a transmission configuration indicator, TCI, field, and the TCI field signals at least one common beam for downlink or uplink transmissions on at least one of at least one channel or at least one reference signal resource, and wherein the DCI schedules a virtual physical downlink shared channel, PDSCH, transmission without making a PDSCH transmission;
transmit (504) a hybrid automatic repeat request, HARQ, codebook to the base station (104, 300), wherein the HARQ codebook comprises a DCI feedback bit indicating whether the processor (202) successfully received the DCI, the DCI feedback bit being transmitted in a resource scheduled for feedback corresponding to the virtual PDSCH transmission; and
apply (506) a TCI state indicated by the TCI field to the at least one of at least one channel or the at least one reference signal resource in response to successfully receiving the DCI.

## Patentansprüche

1. Basisstation (104, 300) für drahtlose Kommunikation, wobei die Basisstation (104, 300) Folgendes umfasst:
mindestens einen Speicher (304); und
mindestens einen Prozessor (302), der mit mindestens einem Speicher (304) gekoppelt ist und konfiguriert ist, um die Basisstation (104, 300) zu Folgendem zu veranlassen:
Übertragen (402) von Downlink-Steuerungsinformationen (downlink control information - DCI) an ein Benutzergerät (user equipment - UE) (102, 200), wobei die DCI ein Übertragungskonfigurationsindikator(transmission configuration indicator - TCI)-Feld umfassen und das TCI-Feld mindestens einen gemeinsamen Strahl für Downlink- oder Uplink-Übertragungen auf mindestens einem von mindestens einem Kanal oder mindestens einer Referenzsignalressource signalisiert und wobei die DCI eine PDSCH-(physical downlink shared channel - gemeinsam genutzter virtueller physischer Downlink-Kanal)-Übertragung planen, ohne eine PDSCH-Übertragung durchzuführen;
Empfangen (404) eines hybriden automatischen Wiederholungsanforderungs(hybrid automatic repeat request - HARQ)-Codebuchs von dem UE (102, 200), wobei das HARQ-Codebuch ein DCI-Feedback-Bit umfasst, das angibt, ob das UE (102, 200) die DCI erfolgreich empfangen hat, wobei das DCI-Feedback-Bit in einer Ressource übertragen wird, die für eine Rückmeldung geplant ist, die der virtuellen PDSCH-Übertragung entspricht; und
Übertragen oder Empfangen (406) auf dem mindestens einen von dem mindestens einen Kanal oder der mindestens einen Referenzsignalressource als Reaktion auf das DCI-Feedback-Bit, das angibt, dass das UE (102, 200) die DCI basierend auf dem in den DCI signalisierten TCI-Feld erfolgreich empfangen hat.

2. Basisstation (104, 300) nach Anspruch 1, wobei das HARQ-Codebuch ein semistatisches HARQ-Codebuch vom Typ 1 umfasst.

3. Basisstation (104, 300) nach Anspruch 1, wobei der mindestens eine Kanal mindestens eines von einem PDSCH, einem physischen Downlink-Steuerkanal (PDCCH), einem gemeinsam genutzten physischen Uplink-Kanal (PUSCH), einem physischen Uplink-Steuerkanal (PUCCH) umfasst und die mindestens eine Referenzsignalressource mindestens eine von mindestens einer Kanalzustandsinformations(CSI)-Referenzsignal(RS)-Ressource (CSI-RS) oder mindestens einer Sounding-Referenzsignal(SRS)-Ressource umfasst.

4. Basisstation (104, 300) nach Anspruch 1, wobei das Übertragen oder Empfangen auf dem mindestens einen von dem mindestens einen Kanal oder der mindestens einen Referenzsignalressource als Reaktion auf das DCI-Feedback-Bit, das angibt, dass das UE (102, 200) die DCI basierend auf dem in den DCI signalisierten TCI-Feld erfolgreich empfangen hat, das Übertragen oder Empfangen frühestens zu einer vorbestimmten Zeit nach dem Empfangen des HARQ-Codebuchs umfasst und die vorbestimmte Zeit durch eine Spezifikation oder durch ein Funkressourcenkonfigurations(channel state information - RRC)-Protokoll bestimmt wird.

5. Benutzergerät (UE) (102, 200) für drahtlose Kommunikation, wobei das UE (102, 200) Folgendes umfasst:
mindestens einen Speicher (204); und
mindestens einen Prozessor (202), der mit mindestens einem Speicher (204) gekoppelt ist und konfiguriert ist, um das UE (102, 200) zu Folgendem zu veranlassen:
Empfangen (502) von Downlink-Steuerungsinformationen (DCI) von einer Basisstation (104, 300), wobei die DCI ein Übertragungskonfigurationsindikator(transmission configuration indicator - TCI)-Feld umfassen und das TCI-Feld mindestens einen gemeinsamen Strahl für Downlink- oder Uplink-Übertragungen auf mindestens einem von mindestens einem Kanal oder mindestens einer Referenzsignalressource signalisiert und wobei die DCI eine PDSCH-(physical downlink shared channel - gemeinsam genutzter virtueller physischer Downlink-Kanal)-Übertragung planen, ohne eine PDSCH-Übertragung durchzuführen;
Übertragen (504) eines hybriden automatischen Wiederholungsanforderungs(HARQ)-Codebuchs an die Basisstation (104, 300), wobei das HARQ-Codebuch ein DCI-Feedback-Bit umfasst, das angibt, ob das UE (102, 200) die DCI erfolgreich empfangen hat, wobei das DCI-Feedback-Bit in einer Ressource übertragen wird, die für eine Rückmeldung geplant ist, die der virtuellen PDSCH-Übertragung entspricht; und
Anwenden (506) eines TCI-Zustands, der durch das TCI-Feld angegeben wird, auf den mindestens einen von mindestens einem Kanal oder die mindestens eine Referenzsignalressource als Reaktion auf das erfolgreiche Empfangen der DCI.

6. UE (102, 200) nach Anspruch 5, wobei der mindestens eine Kanal mindestens eines von einem PDSCH, einem physischen Downlink-Steuerkanal (PDCCH), einem gemeinsam genutzten physischen Uplink-Kanal (PUSCH), einem physischen Uplink-Steuerkanal (PUCCH) umfasst und die mindestens eine Referenzsignalressource mindestens eine von mindestens einer Kanalzustandsinformations(CSI)-Referenzsignal(RS)-Ressource (CSI-RS) oder mindestens einer Sounding-Referenzsignal(SRS)-Ressource umfasst.

7. UE (102, 200) nach Anspruch 5, wobei das DCI-Feedback-Bit eine Bestätigung als Reaktion darauf, dass das UE (102, 200) die DCI erfolgreich empfangen hat, und eine Nicht-Bestätigung als Antwort darauf, dass das UE (102, 200) die DCI nicht erfolgreich empfangen hat, umfasst.

8. UE (102, 200) nach Anspruch 5, wobei das Übertragen des HARQ-Codebuchs an die Basisstation (104, 300) das Übertragen des HARQ-Codebuchs auf einem PUCCH oder einem PUSCH umfasst.

9. UE (102, 200) nach Anspruch 5, wobei das HARQ-Codebuch eine Vielzahl von Bits umfasst und die Vielzahl von Bits das DCI-Feedback-Bit und mindestens ein Feedback-Bit umfasst, das mindestens einem von mindestens einem Transportblock (TB) oder mindestens einer Codeblockgruppe (CBG) entspricht, das mindestens eine Feedback-Bit ein einzelnes Bit umfasst, das ein HARQ-Feedback für zwei TB angibt, die auf einem PDSCH übertragen werden, und das einzelne Bit durch Durchführen einer binären UND-Operation, die an einem ersten Feedback-Bit durchgeführt wird, das einem ersten TB der beiden TB entspricht, und an einem zweiten Feedback-Bit, das einem zweiten TB der beiden TB entspricht, bestimmt wird.

10. UE (102, 200) nach Anspruch 9, wobei jedes Bit der Vielzahl von Bits für eine CBG von bis zu N CBG reserviert ist, ein letztes Bit der Vielzahl von Bits das DCI-Feedback-Bit umfasst, die Vielzahl von Bits N Bits umfasst und als Reaktion darauf, dass N Bits N CBG entsprechen, ein Bit, das einer letzten CBG der mindestens einen CBG entspricht, und ein Bit, das einer vorletzten CBG der mindestens einen CBG entspricht, über eine binäre UND-Verknüpfung zu einem Bit kombiniert werden.

11. UE (102, 200) nach Anspruch 5, wobei die virtuelle PDSCH-Übertragung eine feste Zeitressource umfasst.

12. UE (102, 200) nach Anspruch 5, wobei das DCI-Feedback-Bit ein zusätzliches Feedback-Bit ist, das mit Feedback-Bits übertragen wird, die mindestens einem von mindestens einem TB oder mindestens einer CBG entsprechen.

13. UE (102, 200) nach Anspruch 5, wobei das Anwenden des durch das TCI-Feld angegebenen TCI-Zustands auf den mindestens einen von mindestens einem Kanal oder die mindestens eine Referenzsignalressource als Reaktion auf das erfolgreiche Empfangen der DCI das Anwenden des TCI-Zustands frühestens zu einer vorbestimmten Zeit nach dem Übertragen des HARQ-Codebuchs umfasst und die vorbestimmte Zeit durch eine Spezifikation oder durch ein Funkressourcenkonfigurations(RRC)-Protokoll bestimmt wird.

14. Verfahren, das durch ein Benutzergerät (UE) durchgeführt wird (102, 200), wobei das Verfahren Folgendes umfasst:
Empfangen (502) von Downlink-Steuerungsinformationen (DCI) von einer Basisstation (104, 300), wobei die DCI ein Übertragungskonfigurationsindikator(TCI)-Feld umfassen und das TCI-Feld mindestens einen gemeinsamen Strahl für Downlink- oder Uplink-Übertragungen auf mindestens einem von mindestens einem Kanal oder mindestens einer Referenzsignalressource signalisiert und wobei die DCI eine PDSCH-(physical downlink shared channel - gemeinsam genutzter virtueller physischer Downlink-Kanal)-Übertragung planen, ohne eine PDSCH-Übertragung durchzuführen;
Übertragen (504) eines hybriden automatischen Wiederholungsanforderungs(HARQ)-Codebuchs an die Basisstation (104, 300), wobei das HARQ-Codebuch ein DCI-Feedback-Bit umfasst, das angibt, ob das UE (102, 200) die DCI erfolgreich empfangen hat, wobei das DCI-Feedback-Bit in einer Ressource übertragen wird, die für eine Rückmeldung geplant ist, die der virtuellen PDSCH-Übertragung entspricht; und
Anwenden (506) eines TCI-Zustands, der durch das TCI-Feld angegeben wird, auf den mindestens einen von mindestens einem Kanal oder die mindestens eine Referenzsignalressource als Reaktion auf das erfolgreiche Empfangen der DCI.

15. Computerprogrammprodukt, umfassend Anweisungen, die, wenn das Programm durch einen Computer ausgeführt wird, den Computer zu Folgendem veranlassen:
Empfangen (502) von Downlink-Steuerungsinformationen (DCI) von einer Basisstation (104, 300), wobei die DCI ein Übertragungskonfigurationsindikator(transmission configuration indicator - TCI)-Feld umfassen und das TCI-Feld mindestens einen gemeinsamen Strahl für Downlink- oder Uplink-Übertragungen auf mindestens einem von mindestens einem Kanal oder mindestens einer Referenzsignalressource signalisiert und wobei die DCI eine PDSCH-(physical downlink shared channel - gemeinsam genutzter virtueller physischer Downlink-Kanal)-Übertragung planen, ohne eine PDSCH-Übertragung durchzuführen;
Übertragen (504) eines hybriden automatischen Wiederholungsanforderungs(HARQ)-Codebuchs an die Basisstation (104, 300), wobei das HARQ-Codebuch ein DCI-Feedback-Bit umfasst, das angibt, ob der Prozessor (202) die DCI erfolgreich empfangen hat, wobei das DCI-Feedback-Bit in einer Ressource übertragen wird, die für eine Rückmeldung geplant ist, die der virtuellen PDSCH-Übertragung entspricht; und
Anwenden (506) eines TCI-Zustands, der durch das TCI-Feld angegeben wird, auf den mindestens einen von mindestens einem Kanal oder die mindestens eine Referenzsignalressource als Reaktion auf das erfolgreiche Empfangen der DCI.

## Revendications

1. Station de base (104, 300) pour communication sans fil, la station de base (104, 300) comprenant :
au moins une mémoire (304) ; et
au moins un processeur (302) couplé à au moins une mémoire (304) et configuré pour amener la station de base (104, 300) à :
transmettre (402) des informations de commande de liaison descendante, DCI, à un équipement utilisateur, UE, (102, 200), les DCI comprenant un champ indicateur de configuration de transmission, TCI, et le champ TCI signalant au moins un faisceau commun pour des transmissions en liaison descendante ou en liaison montante sur au moins l'un parmi au moins un canal et au moins une ressource de signal de référence, et les DCI planifiant une transmission de canal physique partagé virtuel en liaison descendante, PDSCH, sans effectuer de transmission PDSCH ;
recevoir (404) un livre de codes de demande de répétition automatique hybride, HARQ (pour « Hybrid Automatic Repeat Request ») de l'UE (102, 200), le livre de codes HARQ comprenant un bit de rétroinformation DCI indiquant si l'UE (102, 200) a reçu avec succès les DCI, le bit de rétroinformation DCI étant transmis dans une ressource programmée pour la rétroinformation correspondant à la transmission PDSCH virtuelle ; et
transmettre ou recevoir (406) sur l'au moins un parmi l'au moins un canal et l'au moins une ressource de signal de référence en réponse au bit de rétroinformation DCI indiquant que l'UE (102, 200) a reçu avec succès les DCI sur la base du champ TCI signalé dans les DCI.

2. Station de base (104, 300) selon la revendication 1, dans laquelle le livre de codes HARQ comprend un livre de codes HARQ semi-statique de type 1.

3. Station de base (104, 300) selon la revendication 1, dans laquelle l'au moins un canal comprend au moins l'un parmi un PDSCH, un canal physique de commande de liaison descendante, PDCCH, un canal physique partagé de liaison montante, PUSCH, un canal physique de commande de liaison montante, PUCCH, et l'au moins une ressource de signal de référence comprend au moins l'une parmi au moins une ressource de signal de référence, RS, d'information d'état de canal, CSI, CSI-RS, et au moins une ressource de signal de référence de sondage.

4. Station de base (104, 300) selon la revendication 1, dans laquelle la transmission ou la réception sur l'au moins un parmi l'au moins un canal et l'au moins une ressource de signal de référence en réponse au bit de rétroinformation DCI indiquant que l'UE (102, 200) a reçu avec succès les DCI sur la base du champ TCI signalé dans les DCI comprend la transmission ou la réception au plus tôt à un moment prédéterminé après la réception du livre de codes HARQ, et le moment prédéterminé est déterminé par une spécification ou par un protocole de configuration de ressources radio, RRC.

5. Équipement utilisateur, UE, (102, 200) pour communication sans fil, l'UE (102, 200) comprenant :
au moins une mémoire (204) ; et
au moins un processeur (202) couplé à au moins une mémoire (204) et configuré pour amener l'UE (102, 200) à :
recevoir (502) des informations de commande de liaison descendante, DCI, d'une station de base (104, 300), les DCI comprenant un champ indicateur de configuration de transmission, TCI, et le champ TCI signalant au moins un faisceau commun pour des transmissions en liaison descendante ou en liaison montante sur au moins l'un parmi au moins un canal et au moins une ressource de signal de référence, et les DCI planifiant une transmission de canal physique partagé virtuel en liaison descendante, PDSCH, sans effectuer de transmission PDSCH ;
transmettre (504) un livre de codes de demande de répétition automatique hybride, HARQ (pour « Hybrid Automatic Repeat Request ») à la station de base (104, 300), le livre de codes HARQ comprenant un bit de rétroinformation DCI indiquant si l'UE (102, 200) a reçu avec succès les DCI, le bit de rétroinformation DCI étant transmis dans une ressource programmée pour la rétroinformation correspondant à la transmission PDSCH virtuelle ; et
appliquer (506) un état TCI indiqué par le champ TCI à l'au moins un parmi au moins un canal et l'au moins une ressource de signal de référence en réponse à la réception réussie des DCI.

6. UE (102, 200) selon la revendication 5, dans lequel l'au moins un canal comprend au moins l'un parmi un PDSCH, un canal physique de commande de liaison descendante, PDCCH, un canal physique partagé de liaison montante, PUSCH, un canal physique de commande de liaison montante, PUCCH, et l'au moins une ressource de signal de référence comprend au moins l'une parmi au moins une ressource de signal de référence, RS, d'information d'état de canal, CSI, CSI-RS, et au moins une ressource de signal de référence de sondage.

7. UE (102, 200) selon la revendication 5, dans lequel le bit de rétroinformation DCI comprend un accusé de réception en réponse à la réception réussie des DCI par l'UE (102, 200) et un accusé de non-réception en réponse à l'échec de la réception des DCI par l'UE (102, 200).

8. UE (102, 200) selon la revendication 5, dans lequel la transmission du livre de codes HARQ à la station de base (104, 300) comprend la transmission du livre de codes HARQ sur un PUCCH ou un PUSCH.

9. UE (102, 200) selon la revendication 5, dans lequel le livre de codes HARQ comprend une pluralité de bits, et la pluralité de bits comprend le bit de rétroinformation DCI et au moins un bit de rétroinformation correspondant à au moins l'un parmi au moins un bloc de transport, TB, et au moins un groupe de blocs de code, CBG, l'au moins un bit de rétroinformation comprend un bit unique indiquant une rétroinformation HARQ pour deux TB transmis sur un PDSCH, et le bit unique est déterminé en réalisant une opération ET binaire réalisée sur un premier bit de rétroinformation correspondant à un premier TB des deux TB et sur un second bit de rétroinformation correspondant à un second TB des deux TB.

10. UE (102, 200) selon la revendication 9, dans lequel chaque bit de la pluralité de bits est réservé pour un CBG jusqu'à N CBG, un dernier bit de la pluralité de bits comprend le bit de rétroinformation DCI, la pluralité de bits comprend N bits, et, en réponse au fait que N bits correspondent à N CBG, un bit correspondant à un dernier CBG de l'au moins un CBG et un bit correspondant à un avant-dernier CBG de l'au moins un CBG sont combinés en un seul bit via une opération ET binaire.

11. UE (102, 200) selon la revendication 5, dans lequel la transmission PDSCH virtuelle comprend une ressource temporelle fixe.

12. UE (102, 200) selon la revendication 5, dans lequel le bit de rétroinformation DCI est un bit de rétroinformation supplémentaire transmis avec des bits de rétroinformation correspondant à au moins l'un parmi au moins un TB et au moins un CBG.

13. UE (102, 200) selon la revendication 5, dans lequel l'application d'un état TCI indiqué par le champ TCI à l'au moins un parmi au moins un canal et l'au moins une ressource de signal de référence en réponse à la réception réussie des DCI comprend l'application de l'état TCI au plus tôt à un moment prédéterminé après la transmission du livre de codes HARQ, et le moment prédéterminé est déterminé par une spécification ou par un protocole de configuration de ressources radio, RRC.

14. Procédé réalisé par un équipement utilisateur, UE, (102, 200), le procédé comprenant :
la réception (502) d'informations de commande de liaison descendante, DCI, d'une station de base (104, 300), les DCI comprenant un champ indicateur de configuration de transmission, TCI, et le champ TCI signalant au moins un faisceau commun pour des transmissions en liaison descendante ou en liaison montante sur au moins l'un parmi au moins un canal et au moins une ressource de signal de référence, et les DCI planifiant une transmission de canal physique partagé virtuel en liaison descendante, PDSCH, sans effectuer de transmission PDSCH ;
la transmission (504) d'un livre de codes de demande de répétition automatique hybride, HARQ (pour « Hybrid Automatic Repeat Request ») à la station de base (104, 300), le livre de codes HARQ comprenant un bit de rétroinformation DCI indiquant si l'UE (102, 200) a reçu avec succès les DCI, le bit de rétroinformation DCI étant transmis dans une ressource programmée pour la rétroinformation correspondant à la transmission PDSCH virtuelle ; et
l'application (506) d'un état TCI indiqué par le champ TCI à l'au moins un parmi au moins un canal et l'au moins une ressource de signal de référence en réponse à la réception réussie des DCI.

15. Produit-programme informatique comprenant des instructions qui, lorsque le programme est exécuté par un ordinateur, amènent l'ordinateur à :
**recevoir** (502) des informations de commande de liaison descendante, DCI, d'une station de base (104, 300), les DCI comprenant un champ indicateur de configuration de transmission, TCI, et le champ TCI signalant au moins un faisceau commun pour des transmissions en liaison descendante ou en liaison montante sur au moins l'un parmi au moins un canal et au moins une ressource de signal de référence, et les DCI planifiant une transmission de canal physique partagé virtuel en liaison descendante, PDSCH, sans effectuer de transmission PDSCH ;
transmettre (504) un livre de codes de demande de répétition automatique hybride, HARQ (pour « Hybrid Automatic Repeat Request ») à la station de base (104, 300), le livre de codes HARQ comprenant un bit de rétroinformation DCI indiquant si le processeur (202) a reçu avec succès les DCI, le bit de rétroinformation DCI étant transmis dans une ressource programmée pour la rétroinformation correspondant à la transmission PDSCH virtuelle ; et
appliquer (506) un état TCI indiqué par le champ TCI à l'au moins un parmi au moins un canal et l'au moins une ressource de signal de référence en réponse à la réception réussie des DCI.
